# EUROPEAN PATENT APPLICATION

(11) **EP 4 748 463 A1**
(43) Date of publication of application: **27.05.2026**
(21) Application number: 25218478.3
(22) Date of filing: 25.11.2025
(51) Int. Cl.: B01B 1/00, B01D 1/00, B01D 9/02, B01D 11/02, B01D 21/00, B01D 53/00, B01D 53/14, B01J 6/00, B01J 8/00, B03D 1/00, B03D 1/002, B07B 1/00, B09B 3/70, C01B 32/00, C01B 32/05, C01B 33/00

(54) **METHOD FOR RECYCLING ANODE MATERIAL FOR LITHIUM-ION SECONDARY BATTERY, RECYCLED ANODE MATERIAL OBTAINED THEREFROM, AND LITHIUM-ION SECONDARY BATTERY USING THE SAME**

(30) Priority: 25.11.2024 KR 20240170003; 20.11.2025 KR 20250177251
(71) Applicant: AK tree Co., Ltd, Seoul 06164 (KR); Libus987 Inc, Houston, TX 77036 (US)
(72) Inventor: AHN, Hyo Soo, 44784 Ulsan (KR); LEE, Bong Kee, 04732 Seoul (KR)
(74) Representative: Beck & Rössig European Patent Attorneys

(57) **Abstract**

An object of the invention is to provide a method for economically and environmentally friendly collecting carbon powder for an anode from a waste lithium-ion secondary battery, a recycled anode carbon powder obtained from therefrom, and a lithium-ion secondary battery to which the recycled anode carbon powder is applied. To achieve the object, a method for recycling an anode material includes a step (a) of loading a heat treatment object including the anode material into a heat treatment furnace, a step (b) of raising an internal temperature of the heat treatment furnace to increase to a range of about 100°C to about 400°C, a step (c) of heat-treating the heat treatment object at the increased temperature, and a step (d) of discharging first powder made after the heat treatment of the heat treatment object is completed. The first powder includes recycled anode powder selected from the group consisting of recycled carbon powder, silicon powder, silicon oxide powder, carbon-silicon composite material powder, or combinations thereof, and the heat treatment object includes at least a portion of a waste lithium-ion secondary battery or wastes generated during a process of manufacturing the lithium-ion secondary battery or a process of manufacturing the anode material.

## Description

### BACKGROUND OF THE INVENTION

### 1. Field of the Invention

The present invention relates to recycled anode powder obtained by re-treating wastes containing an anode material for a lithium-ion secondary battery and a method for recycling anode powder, and more particularly, to a recycled anode powder obtained by heat treating an anode material contained in a waste lithium-ion secondary battery or discarded during a process at a low temperature and a method for recycling anode powder.

### 2. Description of the Related Art

Since electric vehicle batteries are typically discarded after being used for about 5 years to about 10 years, markets related to waste batteries have recently seen substantial growth. It is estimated that the global generation of waste electric vehicle batteries reaches approximately 1.6 million tons by 2030, and various countries, centered around Europe, are making large-scale investments in the development of processes for collecting valuable metals from the waste batteries.

Unlike the reuse, in the industry for recycling the waste batteries, valuable metals may be collected from the waste batteries so as to be reused as raw materials, thereby simultaneously solving environmental problems and stably securing valuable resources.

In the recycling of the waste batteries, valuable metals are generally extracted through wet smelting or dry smelting processes after discharging, dismantling, and pulverizing. Here, the dry smelting process that is suitable for large-scale processing and has a high recovery rate is attracting attention.

In the dry smelting, pulverized powder is heated at a high temperature, and then, organic compounds and polymer components contained within the pulverized powder are incinerated and removed and then is pulverized again to extract the valuable metals through strong acids in a wet manner.

In the dry smelting process, a lot of time and an apparatus for discharging and pulverizing are required, and even after, a complex process is undergone to deteriorate economic efficiency, and the resultant material discharged after being heated to a high temperature contains a large amount of impurities. As a result, an extraction ratio of the valuable components capable of being obtained from the entire powder becomes low and exists in an agglomerated state, and thus, re-pulverizing and the use of strong acids are inevitable to extract the valuable components, thereby raising environmental concerns.

In particular, recently, carbon powder contained in an anode is mainly discarded during a dry process and thus is not economically or environmentally desirable, also collection of the carbon powder has become an important issue.

### SUMMARY OF THE INVENTION

The present invention addresses the above-identified, and other problems associated with conventional methods and apparatuses.

According to an embodiment of the invention, there is provided a method for economically and environmentally friendly collecting anode powder from a waste lithium-ion secondary battery, a recycled anode material powder obtained from therefrom, and a lithium-ion secondary battery to which the recycled anode material powder is applied.

A method for recycling an anode material includes: a step (a) of loading a heat treatment object including the anode material into a heat treatment furnace; a step (b) of raising an internal temperature of the heat treatment furnace to increase to a range of about 100°C to about 400°C; a step (c) of heat-treating the heat treatment object at the increased temperature; and a step (d) of discharging first powder made after the heat treatment of the heat treatment object is completed, wherein the first powder includes recycled anode powder selected from the group consisting of recycled carbon powder, silicon powder, silicon oxide powder, carbon-silicon composite material powder, or combinations thereof, and the heat treatment object includes at least a portion of a waste lithium-ion secondary battery or wastes generated during a process of manufacturing the lithium-ion secondary battery or a process of manufacturing the anode material.

In addition, the method may further includes, before said step (b), a step of preheating the internal temperature of the heat treatment furnace to a range of about 100°C or less.

In addition, the method may further includes a step of extracting the recycled anode powder from the first powder through classification.

In addition, in results of Raman spectrum analysis for the recycled anode powder, no organic component may be detected.

In addition, in results of X-ray fluorescence analysis (XRF) for the recycled anode powder, fluorine may be detected at about 2 wt% or less or is not detected at all.

In addition, in said (b) and (c) steps, a gas generated inside the heat treatment furnace may be forcibly exhausted.

In addition, an exhaust gas discharged through the forced exhaust may pass through an aqueous solution containing water to dissolve a fluorine component, which is contained in the exhaust gas, in the aqueous solution, thereby collecting the fluorine component.

In addition, in said (b) and (c) steps, the gas may be forcibly discharged while reducing a pressure inside the heat treatment furnace.

In addition, in said (b) and (c) steps, the gas may be forcibly discharged through a fan disposed in the heat treatment furnace.

In addition, the forced exhaust may be carried out intermittently.

In addition, in said step (a), the heat treatment object may be an anode collected by decomposing the waste lithium-ion secondary battery.

In addition, the method may further include, after said step (d), a step of putting the discharged first powder to water and dissolving a lithium component contained in the first powder to separate and collect each of a lithium aqueous solution, a precipitate that is sunk in the lithium aqueous solution, and a floating material that floats on a surface of the lithium aqueous solution, wherein the floating material may include the recycled anode powder.

In addition, a temperature of the water into which the first powder is input may be about 30°C or less.

In addition, the method may further include a step of collecting lithium carbonate by evaporating water of the lithium aqueous solution.

Recycled anode powder for a lithium-ion secondary battery produced by the method for recycling the waste lithium-ion secondary battery according to the invention may be provided.

Secondary battery manufactured by including the recycled anode powder according to the invention may be provided.

### BRIEF DESCRIPTION OF THE DRAWINGS

Fig. 1 illustrates an image of an anode separated from a waste lithium-ion secondary battery before recycling treatment and powder obtained after treating the anode;
Fig. 2 illustrates a scanning electron microscope image of carbon powder for the anode before the recycling treatment;
Fig. 3 illustrates a scanning electron microscope image of the carbon powder for the anode before the recycling treatment and results of EDS element analysis;
Fig. 4 illustrates a scanning electron microscope image of carbon powder for an anode collected through a method for recycling a waste lithium-ion secondary battery according to an embodiment of the invention;
Fig. 5 illustrates results of X-ray diffraction analysis of the carbon powder for the anode which is collected through the for recycling the waste lithium-ion secondary battery according to an embodiment of the invention; and
Fig. 6 illustrates a graph of evaluation of cycle characteristics of a coin cell made of the carbon powder for the anode, which is collected through the method for recycling the waste lithium ion secondary battery, and commercial carbon powder.

### DETAILED DESCRIPTION OF THE EXEMPLARY EMBODIMENTS

Hereinafter, embodiments of the invention will be described in detail with reference to the accompanying drawings so that those skilled in the art can easily carry out the invention. The invention may, however, be embodied in different forms and should not be construed as limited to the embodiments set forth herein.

In the entire specification, when it is described that one comprises (or includes or has) some elements, it should be understood that it may comprise (or include or has) only those elements, or it may comprise (or include or have) other elements as well as those elements if there is no specific limitation.

The terms "about," "substantially," etc., as used herein, are used in the sense of being close to or within the numerical values at which the inherent manufacturing and material tolerances for the mentioned meanings are presented, and are used to prevent those who would unscrupulously infringe from improperly using the invention when precise or absolute numerical values are mentioned to aid understanding. In addition, throughout the invention, "a step of..." or "a process of ..." does not imply "a step for...".

Throughout this specification, the term "combinations thereof" included in the Markush-type expression refers to one or more mixtures or combinations selected from the group consisting of the elements described in the Markush-type expression, meaning that it includes one or more elements selected from the group consisting of the elements.

Throughout this specification, the wording "A and/or B" means "A or B, or both A and B".

According to one aspect of the invention, there is provided a method for recycling a waste lithium-ion secondary battery, which includes a step (a) of loading a heat treatment object, which is at least a portion of a waste lithium-ion secondary battery by containing an anode material, into a heat treatment furnace, a step (b) of raising an internal temperature of the heat treatment furnace to increase to a range of about 100°C to about 400°C, a step (c) of maintaining the increased temperature to heat-treating the heat treatment object, and a step (d) of discharging first powder made after the heat treatment of the waste lithium-ion secondary battery is completed. The first powder includes recycled anode powder selected from the group consisting of recycled carbon powder, silicon powder, silicon oxide powder, carbon-silicon composite material powder, or combinations thereof.

In the invention, the waste lithium ion secondary battery for the recycling treatment may include carbon powder as an anode material. The carbon powder for the anode material may include natural graphite powder, artificial graphite powder, mesocarbon microbeads, hard carbon, soft carbon, etc., but is not limited thereto. In addition, the anode material may further include silicon powder, silicon oxide powder, or carbon-silicon composite material powder in addition to the carbon powder.

In the heat treatment object put into the heat treatment furnace, the waste lithium-ion secondary battery may represent the entire waste lithium-ion secondary battery cell or at least a portion thereof that includes the anode material. In addition, the waste lithium-ion secondary battery may be a "black mass" which is powder obtained by decomposing and pulverizing the waste lithium-ion secondary battery or may be defective products or process scrap generated during the process of manufacturing the lithium-ion secondary battery. In addition, the powder may include manufacturing process wastes such as defective anode materials and scraps generated during the anode material manufacturing process.

In an embodiment of the invention, to effectively collect the anode material, the waste lithium-ion secondary battery may be decomposed, and only an anode in which a current collector and the anode material are combined may be separated and then put into the heat treatment furnace.

In the recycling process for the waste lithium-ion secondary batteries according to the related art, the waste lithium-ion battery may be decomposed, pyrolyzed at a high temperature so as to be agglomerated, and then pulverized. As a result, many impurities may be contained by including not only a cathode material and the anode material intended for the recycling, but also a case and the current collector and also may be pulverized in the agglomerated state to cause significant modifications to the cathode material and the anode material, which do not remain in their original (raw material) states.

In contrast, according to the recycling method according to the invention, an electrolyte may be removed through low-temperature heat treatment, and a binder contained in the anode may be decomposed to simply separate the anode material from the current collector. In particular, stable carbon powder or silicon powder may be collected without damage through low-temperature decomposition at a low temperature and thus may retain the same characteristics as a new product or have characteristics equivalent to those of the new product after undergoing simple cleaning or pickling processes and thus may be recycled in the manufacture of the lithium-ion secondary battery.

The heat treatment process carried out to collect the anode powder to be recycled in the invention may be particularly carried out in a range of about 100°C to about 400°C and may also be in a range of about 150°C to about 350°C, about 200°C to about 350°C, or about 200°C to about 300°C. The battery may be heated at a relatively low temperature, and thus, the binder, the electrolyte, etc., contained within the battery may be pyrolyzed and removed. In particular, self-heating may occur due to components such as the internal binder and the electrolyte, which may lead to the pyrolysis. In particular, a low temperature range of about 100°C to about 200°C may be more suitable depending on the type of the binder to be used.

In addition, a preheating step in which materials that are easily volatilized or evaporated, such as moisture or electrolyte, are first removed while preheating to below 100°C before the heat treatment at a temperature range of about 100°C to about 400°C.

When compared with the recycling method according to the related art, the heat treatment may be carried out at a low temperature to reduce energy costs. In addition, since the anode powder is collected without damage through the low-temperature heat treatment, the collected powder may be directly recycled without the need for separate post-treatment that requires a long time and high costs.

In the steps (b) and (c) described above, it is preferable to forcibly exhaust a gas generated inside the heat treatment furnace.

The importance of the emission of the gas may be in the fact that the gas generated by the decomposition during the heat treatment of the binder, the electrolytes, etc., contain fluorine. When the fluorine-containing gas remains within the heat treatment furnace, the gas may be combined with the cathode material, the anode material, etc., to form a strongly bonded lump. When the heat-treated powder is bonded to form the lump, it may be difficult to become the powdery state even through post-treatment such as the pulverizing. Thus, the rapid discharge of the gas containing fluorine may be an important issue. However, as in the related art, the heat treatment at the high temperatures may inevitably lead to the rapid generation of the fluorine-containing gas. As a result, when the gas remains in the heat treatment furnace for a long time, the agglomeration of the powder may be accelerated.

In contrast, since the method for recycling the lithium-ion secondary battery according to the invention is performed by controlling a decomposition rate of the binder through the low-temperature heat treatment, an amount of gas containing fluorine components generated per unit time may be maintained at an appropriate level. At the same time, the generated gas may be rapidly and forcibly discharged to minimize a residence time of the gas containing the fluorine components within the heat treatment furnace and prevent agglomeration of powder caused by fluorine.

During the heat treatment process, the inside of the heat treatment furnace may be depressurized to maintain a negative pressure state for the forced exhaust. When the waste lithium-ion secondary battery is heated in the heat treatment furnace, the gas generated from the decomposition of the binder, the electrolyte, a separator, etc., may be discharged to the outside due to the maintenance of the negative pressure state. To maintain the negative pressure state, a gas discharge port and an airflow adjustment unit connected to the discharge port may be disposed in the heat treatment furnace. A variety of means such as a pump, a fan, and a venturi system may be applied as the airflow adjustment unit. In particular, the venturi system may be preferable since the exhaust gas is not in direct contact with a driving motor, etc., and is implemented through a simple system.

In addition, the exhaust process may allow for the continuous or intermittent discharge of the decomposition gas, which occurs within the heat treatment furnace. When the emission amount is too high, it may be difficult to increase and maintain the internal temperature through heat treatment furnace, and thus, this process may be carried out intermittently in conjunction with the internal temperature.

Thus, the discharge of the internal atmosphere through the decompression inside the heat treatment furnace may be controlled in conjunction with the temperature inside the heat treatment furnace. This control may be achieved through a controller that controls a temperature sensor installed therein while monitoring a temperature measured by the temperature sensor.

Ultimately, the organic material and the fluorine components therein may be removed to collect the anode material in the powdery state, and thus, this may not require an additional pulverizing process, and the collected carbon powder may be directly recycled for the manufacture of new batteries.

In an embodiment of the method for recycling the anode material according to the invention, the exhaust gas discharged through the exhaust may pass through an aqueous solution, and thus, hydrogen fluoride contained in the exhaust gas may be dissolved in the aqueous solution so as to be collected. The exhaust gas may be collected using a hydrofluoric acid aqueous solution to prevent environmental pollution caused by the exhaust gas and improve an added value of the process.

The anode powder collected after the heat treatment through the method for recycling the anode material may not contain the organic components. The impurities such as the binder may be completely removed through the low-temperature heat treatment and the forced exhaust, and thus, the organic components may be contained. As a result, the anode powder such as carbon may be easily collected in the powdery state and may be directly used in the manufacture of the lithium-ion secondary batteries without any special re-treatment.

Here, the meaning of "not containing the organic component" means that no organic component is detected in results of Raman spectrum analysis.

The anode powder collected through the recycling method according to the invention may not contain the organic component, fluorine may contain about 2 wt% or less or may not be contained at all. Here, the content of the fluorine may refer to results of analysis by X-ray fluorescence analysis.

In addition, in the recycling method according to the invention, in addition to the carbon powder, components of the cathode material such as nickel, cobalt, manganese, aluminum, iron, etc., may be contained in the form of metal or oxide, and a lithium component may also be contained in the first powder discharged after the heat treatment. When the first powder is added to water, the metal or oxide may be sunk on the bottom, the lithium component may be dissolved in the water, and the anode powder such as carbon or silicon may float on a water surface due to its lower specific gravity. When the floating material is collected, only the anode powder may be separated and collected with high yield and through a simple process.

A temperature of the water into which the first powder is added may be about 30°C or less, and this may be because the dissolution of the lithium components is facilitated at a lower temperature.
In addition, when the lithium-soluble water is evaporated, lithium carbonate may be economically collected.

### [Embodiment]

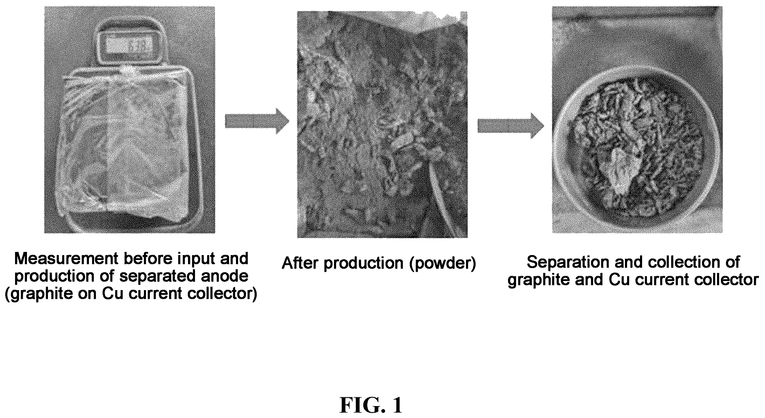

A waste lithium-ion secondary battery using artificial graphite powder as an anode material was disassembled, and only an anode (in which the anode material was laminated on a copper collector) was put into a heat treatment furnace and then treated according to the recycling method of the invention to collect first powder. Fig. 1 illustrates an image of an anode separated from a waste lithium-ion secondary battery before treatment and powder obtained after treating the anode.

After loading the waste lithium-ion secondary battery into a heat treatment furnace, the waste lithium-ion secondary battery was heat-treated while adjusting an internal temperature of the furnace to about 280°C. The temperature increased for about 6 hours and then was maintained at the increased temperature for about 12 hours. During the reaction, the internal atmosphere was discharged through a fan, and the internal temperature was maintained within a range of about 280±15°C in conjunction with a temperature sensor.

After the reaction is completed, the powdery material was collected to obtain the first powder. The first powder was added to water, subjected to ultrasonic treatment, and then filtered to separate and collect artificial graphite powder.

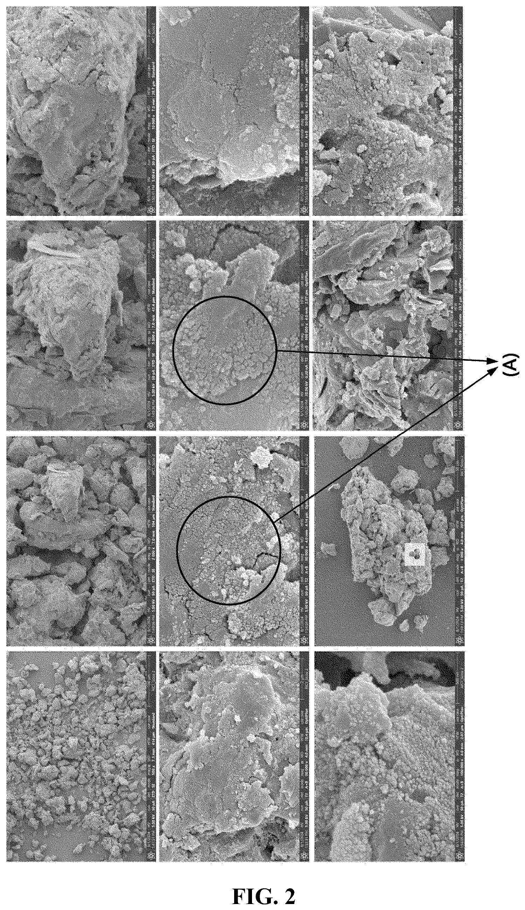

Fig. 2 illustrates a scanning electron microscope image of carbon powder for the anode separated from the waste lithium ion secondary battery before the recycling treatment. A surface A of the anode carbon powder before the treatment is shown to be roughened due to a material presumed to be a lithium compound.

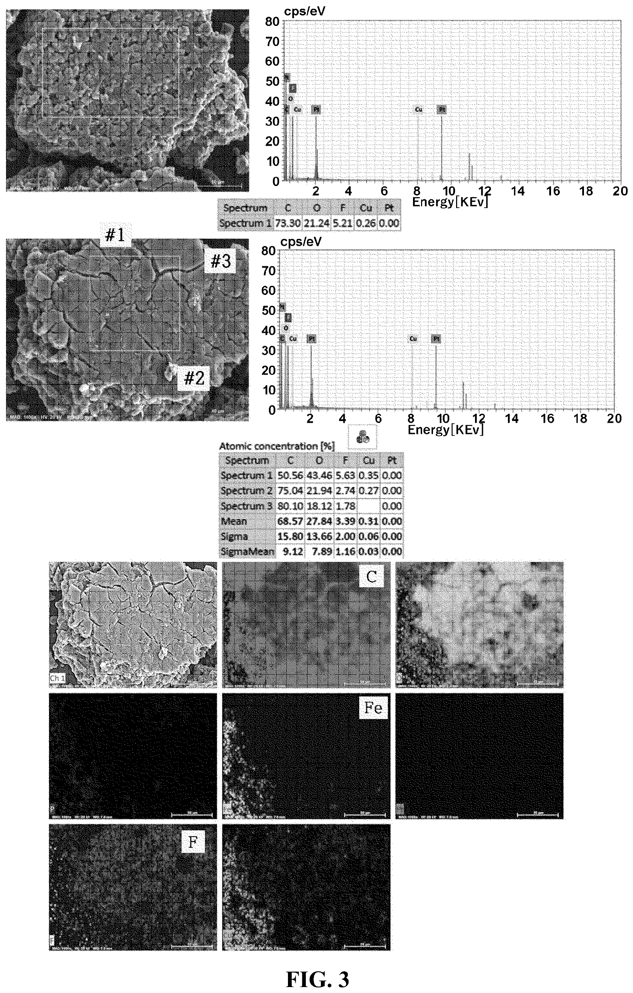

Fig. 3 illustrates a scanning electron microscope (SEM) image of the carbon powder for the anode separated from the waste lithium ion secondary battery before the recycling treatment and results of energy dispersive spectroscopy (EDS) analysis thereof. It was seen that various impurities such as Fe, Cu, and F are mixed with carbon on the surface. The surface impurity deposition may lead to deterioration of cell performance.

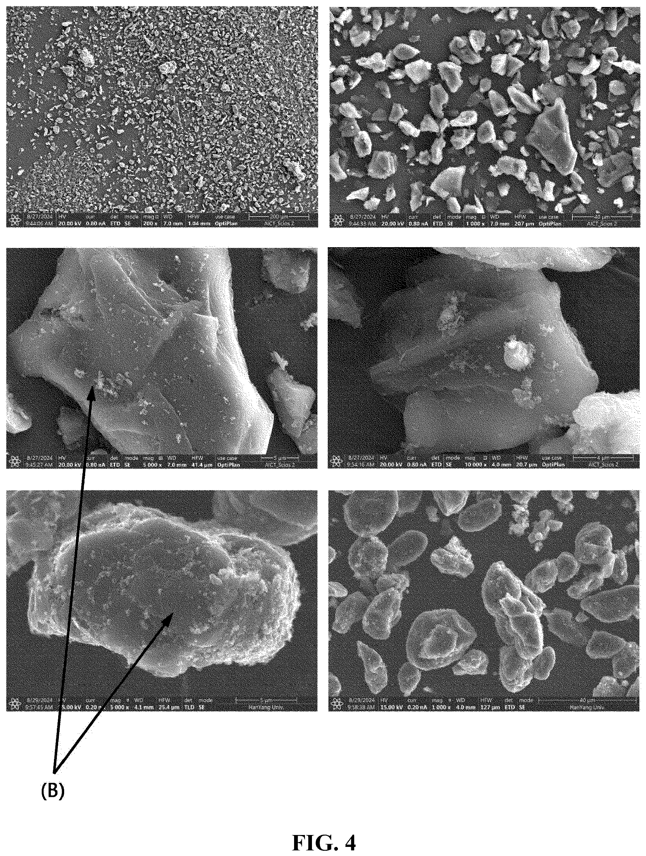

Fig. 4 illustrates a scanning electron microscope image obtained by observing a surface of the carbon powder for the anode, which is treated according to an embodiment of the invention. It was seen that a surface B becomes clean without the deposition of the surface impurities, unlike before the treatment.

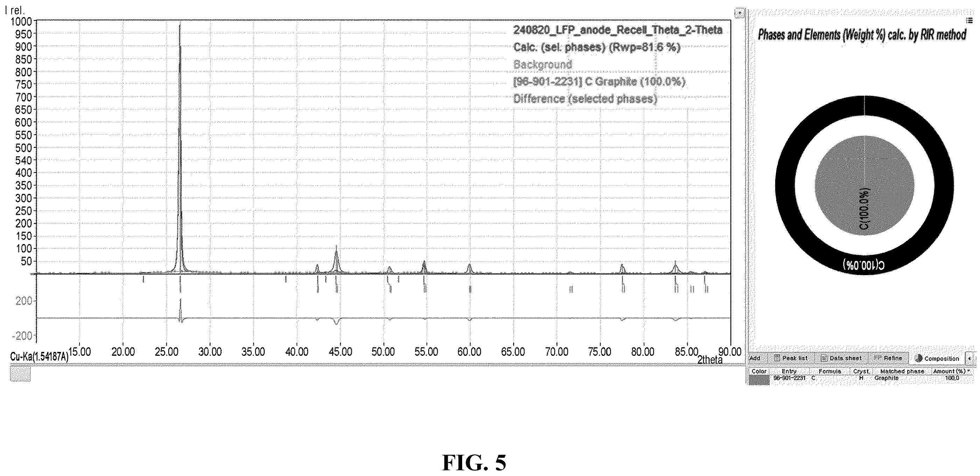

Fig. 5 shows that pure carbon powder was collected as results of X-ray diffraction analysis for the collected carbon powder for the anode.

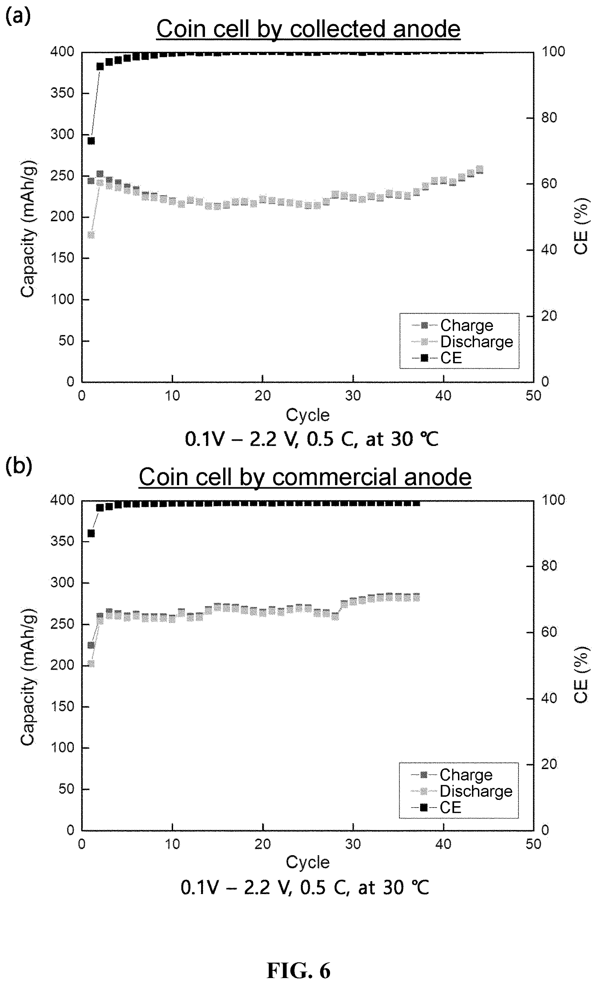

Fig. 6(a) illustrates results of a charge-discharge cycle test by manufacturing a coin cell using the collected carbon powder for the anode, and Fig. 6(b) illustrates a charge-discharge cycle test by manufacturing a coin cell using commercial carbon powder for the anode. According to the invention, it was seen that there is no difference in performance between the recycled carbon powder for the anode and the commercial carbon powder for the anode.

As described above, since the carbon powder for the anode collected by the recycling method according to the invention has no difference in characteristics from newly produced carbon powder, it may be directly used in the manufacturing of the lithium ion battery without any additional post-treatment to manufacture the lithium ion batteries having high economic efficiency. In addition, since this process is carried out through a low-temperature heat treatment, it may be economical and environmentally friendly to increase in recycling rate of the waste lithium-ion secondary batteries and solve potential environmental limitations that may occur during the recycling.

Since the method for recycling the anode material according to the invention is economical and environmentally friendly, the recycling of the waste lithium-ion secondary batteries may increase, and the environmental problems that may occur during the recycling may be solved.

In addition, the lithium-ion secondary batteries having the high economic efficiency may be manufactured through the recycled anode material powder obtainable according to the invention.

## Claims

1. A method for recycling an anode material, the method comprising:
a step (a) of loading a heat treatment object comprising the anode material into a heat treatment furnace;
a step (b) of raising an internal temperature of the heat treatment furnace to increase to a range of about 100°C to about 400°C;
a step (c) of heat-treating the heat treatment object at the increased temperature; and
a step (d) of discharging first powder made after the heat treatment of the heat treatment object is completed,
wherein the first powder comprises recycled anode powder selected from the group consisting of recycled carbon powder, silicon powder, silicon oxide powder, carbon-silicon composite material powder, or combinations thereof, and
the heat treatment object comprises at least a portion of a waste lithium-ion secondary battery or wastes generated during a process of manufacturing the lithium-ion secondary battery or a process of manufacturing the anode material.

2. The method according to Claim 1,
further comprising, before said step (b), a step of preheating the internal temperature of the heat treatment furnace to a range of about 100°C or less.

3. The method according to Claim 1 or 2,
further comprising a step of extracting the recycled anode powder from the first powder through classification.

4. The method according to one of Claims 1 to 3,
wherein, in results of Raman spectrum analysis for the recycled anode powder, no organic component is detected.

5. The method according to one of Claims 1 to 4,
wherein, in results of X-ray fluorescence analysis (XRF) for the recycled anode powder, fluorine is detected at about 2 wt% or less or is not detected at all.

6. The method according to one of Claims 1 to 5,
wherein, in said (b) and (c) steps, a gas generated inside the heat treatment furnace is forcibly exhausted.

7. The method according to Claim 6,
wherein, in said (b) and (c) steps, the gas is forcibly discharged while reducing a pressure inside the heat treatment furnace.

8. The method according to Claim 6 or 7,
wherein, in said (b) and (c) steps, the gas is forcibly discharged through a fan disposed in the heat treatment furnace.

9. The method according to one of Claims 6 to 8,
wherein the forced exhaust is carried out intermittently.

10. The method according to one of Claims 6 to 9,
wherein an exhaust gas discharged through the forced exhaust passes through an aqueous solution containing water to dissolve a fluorine component, which is contained in the exhaust gas, in the aqueous solution, thereby collecting the fluorine component.

11. The method according to one of Claims 1 to 10,
wherein, in said step (a), the heat treatment object is an anode collected by decomposing the waste lithium-ion secondary battery.

12. The method according to one of Claims 1 to 11,
further comprising, after said step (d), a step of putting the discharged first powder to water and dissolving a lithium component contained in the first powder to separate and collect each of a lithium aqueous solution, a precipitate that is sunk in the lithium aqueous solution, and a floating material that floats on a surface of the lithium aqueous solution,
wherein the floating material comprises the recycled anode powder.

13. The method according to Claim 12,
wherein a temperature of the water into which the first powder is input is about 30°C or less; and/or
further comprising a step of collecting lithium carbonate by evaporating water of the lithium aqueous solution.

14. Recycled anode powder for a lithium-ion secondary battery produced by the method for recycling the waste lithium-ion secondary battery according to any one of Claims 1 to 13.

15. Secondary battery manufactured by comprising the recycled anode powder according to Claim 14.
